# EUROPEAN PATENT SPECIFICATION

(11) **EP 3 164 687 B1**
(45) Date of publication and mention of the grant of the patent: **07.04.2021**
(21) Application number: 15736581.8
(22) Date of filing: 29.06.2015
(51) Int. Cl.: G01M 3/16, G01M 3/40, G01M 3/18

(54) **CONDUCTING MESH**
LEITENDES NETZ
MAILLE CONDUCTRICE

(30) Priority: 01.07.2014 GB 201411695
(43) Date of publication of application: 10.05.2017
(73) Proprietor: Sensor Spol. S.r.o, 902 01 Pezinok (SK); Sensor (UK) Ltd., Lancashire FY8 5NL (GB)
(72) Inventor: NOSKO, Vladimir, 902 01 Pezinok (SK)
(74) Representative: Appleyard Lees IP LLP
(86) International application number: PCT/GB2015/051895
(87) International publication number: WO 2016/001640

(56) References cited:
- EP-A1- 1 659 224
- AU-A1- 2012 202 190
- US-A- 5 288 168
- US-A- 5 850 144
- US-A1- 2005 170 177
- US-A1- 2006 105 163
- US-A1- 2012 090 400
- US-B1- 6 648 552

## Description

This invention relates to a conductive mesh, particularly, but not limited to, a conductive mesh for use in a system for monitoring integrity of a geomembrane.

Various methods of electronic leak detection and location have been disclosed previously. Some of the methods involve the use of a highly resistive plastic geomembrane being installed with electric poles at either side of the membrane. When a fault occurs in the geomembrane an electric connection occurs, which is detected as a current flow.

In a more sophisticated system, as described in EP0962754, often referred to as a fixed or permanent leak detection system, a network/grid of point sensors is installed on the geomembrane to allow for more accurate detection of a leak. For example, sensors may be spaced on a grid of approximately 3 m x 3 m, which spacing can lead to a sensitivity of approximately 300 mm. Other grid spacings are possible, for example at intervals of between 3 and 10 metres. In this installation the sensors are located on one side of the geomembrane, leaks through the geomembrane are then detectable.

A further improvement of this type of system is to use two layers of membrane with the sensors and a conductive geotextile being located between the two layers of geomembrane and source electrodes being located outside the two layers of geomembrane in the earth or covering above and below the two geomembranes. The use of two membranes with sensors and conductive textile in between allows an alarm type of detection and location system to be provided, because the sensors are isolated from currents within the material being retained by the geomembrane and also from stray or environmental currents in the earth outside the geomembrane. Thus, when a leak does occur and the moisture leaks into the space between the two geomembranes this allows the electrical signal current to flow with the moisture into the encapsulated conductive textile between the two layers of membrane, the point sensors can detect the increase in current, allowing an alarm condition to be raised if a suitable monitoring system is installed and connected to the point sensors. Such systems exist for both online / permanent monitoring of membrane with suitable monitoring equipment being installed permanently on site and offline systems where only connectors are installed on site requiring power sources and testing equipment to be brought to site in order to test the installed point sensor system manually.

In this prior art system, the conductive geotextile located between the membranes is generally delicate, and can be difficult to install without breaking. Furthermore, the nature of the conductive geotextile means that outdoor installation is susceptible to being complicated by adverse weather conditions. For example, the conductive geotextile may be blown around in the wind.

Additionally, the conductive geotextile is often provided as a layer, having a conductive metal wire layer disposed between two non-conductive but porous layers which solely act to protect and carry the metal wire layer. In order to connect a sheet of conductive geotextile with another adjacent sheet of conductive geotextile during the installation, the three layers must be separated at the edge of the sheet to expose the metal wire layer, which is then brought into contact with the exposed metal wire layer of the adjacent sheet. This process is complex and time consuming.

US 2006/010563 A1 discloses a geomembrane laminated together with an electrically conductive sub-layer. US 2005/0170177 A1 discloses a conductive yarn. US 5 288 168 A discloses a plastic sheet having conductive particles embedded therein.

It is an object of the present invention to address the abovementioned disadvantages. According to the present invention there is provided an apparatus and method as set forth in the appended claims. Other features of the invention will be apparent from the dependent claims, and the description which follows.

According to an aspect of the present invention, there is provided a conductive mesh for a leak detection system formed from single conductive layer.

The material of the mesh itself advantageously provides conductivity to the grid and has the inherent strength to avoid the necessity for carrier textiles and thereby avoids installation problems associated with certain weather conditions.

The conductive mesh comprises a plurality of first members and a plurality of second members, wherein the first and second members form a grid. The grid is formed by crossing first and second members being held together. The members may be held together by a welded joint. The members may be held together by tying means.

The conductive mesh comprises plastics materials, such as, but not limited to, polyethylene.

The conductive mesh further comprises carbon, mixed in with the plastics material.

According to an aspect of the invention there is provided a leak detection system comprising at least one geomembrane, at least one conducting mesh, an electrical source and at least two electrodes.

According to an aspect of the present invention there is provided a geomembrane incorporating a conductive mesh.

According to an aspect of the present invention, there is provided a method of forming a conductive mesh wherein the method comprises:
extruding a plurality of first and second members;
arranging the first and second members in a grid, and
connecting the plurality of first and second members using a plurality of fastening means, wherein the conductive mesh is formed from a single conductive layer and the first and second members comprise plastics material and carbon mixed in with the plastics material, and the conductive mesh is self-supporting.

The method may further comprise mixing carbon into a molten plastics material to be extruded. The extruding may comprise extruding the plurality of first and second members from the molten plastics material comprising carbon.

The carbon may be in the form of granules or powder.

The quantity of carbon may be varied depending upon the particular use intended for the conductive mesh.

The fastening means may comprise a plastic extrusion weld.

The fastening means may comprise a plastic fusion weld.

The fastening means may comprise a zip tie or other mechanical fastener.

According to an aspect of the present invention, there is provided a method of installing a plurality of sheets of conductive mesh adjacent to each other, the method comprising:
laying a first sheet;
laying a second sheet adjacent to the first sheet, and
connecting the first and second sheets using a fastening means.

The fastening means may comprise a plastic extrusion weld.

The fastening means may comprise a plastic fusion weld.

The fastening means may comprise a zip tie or other mechanical fastener.

According to an aspect of the present invention, there is provided a method of installing a plurality of sheets of geomembrane, wherein each geomembrane comprises a pre-attached conductive mesh, the method comprising:
laying a first sheet of geomembrane;
laying a second sheet of geomembrane;
connecting the first and second sheets of geomembrane, and
connecting a first and second pre-attached conductive meshes, wherein the first and second pre-attached conductive meshes are each formed according to any of the method steps described previously.

The connecting the first and second sheets of geomembrane may employ a plastic extrusion welder.

The connecting the first and second sheets of geomembrane may employ a plastic twin or single track fusion welder or hot wedge welder.

The connecting the first and second pre-attached conductive meshes may employ the plastic extrusion welder.

The connecting the first and second pre-attached conductive meshes may employ a plastic hot air welder or compression between two heated plates to create a fusion weld.

The connecting the first and second pre-attached conductive meshes may employ a zip tie or other mechanical fastener.

For a better understanding of the invention, and to show how embodiments of the same may be carried into effect, reference will now be made, by way of example, to the accompanying diagrammatic drawings in which:
Figure 1a is a cross-sectional view of a prior art conductive geotextile.
Figure 1b is a plan view of the metal wire layer of a prior art conductive geotextile.
Figure 1c is a cross-sectional view of two connected prior art conductive geotextiles.
Figure 2 is a plan view of a conductive mesh in accordance with an exemplary embodiment of the invention.
Figure 3a is a schematic perspective drawing of a conductive mesh part-way through installation in accordance with an exemplary embodiment of the invention.
Figure 3b is a cross-sectional view of two connected conductive meshes according to an exemplary embodiment of the invention.
Figure 4 is a cross-sectional view of two connected conductive meshes and geomembranes according to an exemplary embodiment of the invention.

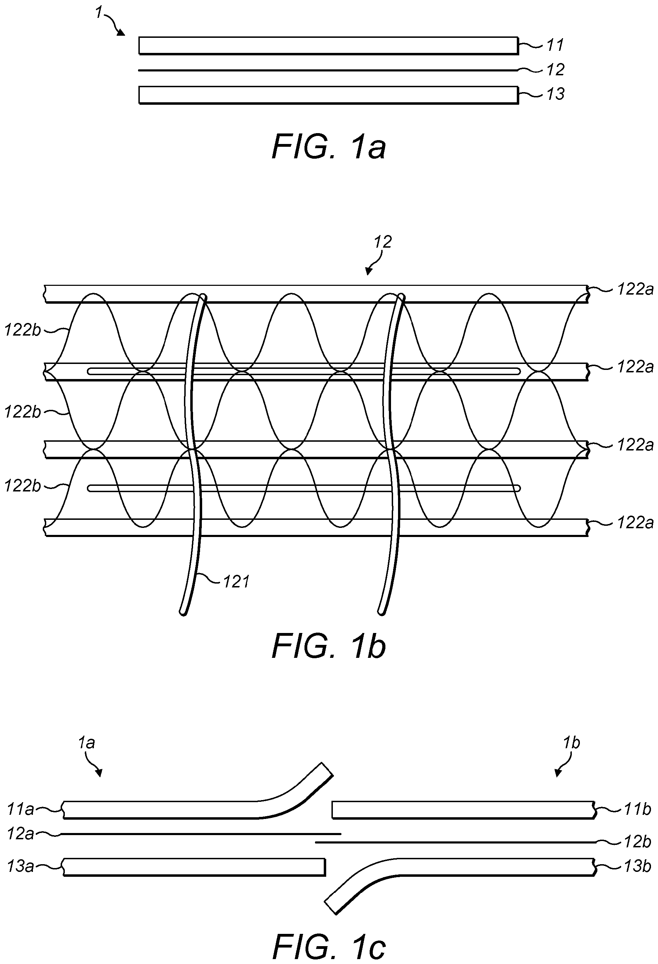

Figure 1a shows a cross-sectional view of a conductive geotextile 1 according to the prior art. The conductive geotextile 1 is composed of three layers: a first non-conductive layer 11, a metal wire layer 12 and a second non-conductive layer 13.

The first and second non-conductive layers 11 and 13 are made of a material such as polypropylene, and are required to protect the metal wire layer 12, both during installation and in use.

The metal wire layer 12 is described in detail with reference to Figure 1b, which is a plan view of said metal wire layer 12. The metal wire layer 12 is a thin layer comprising a plurality of very thin metal wires 121 woven into a plastic support 122.

The plastic support 122 comprises a plurality of first plastic members 122a arranged in parallel, and a plurality of second plastic members 122b. The second plastic members 122b are interleaved between the first plastic members 122a, in order to form a grid. The spaces of the grid may be approximately 3 mm x 5 mm.

The plastic support 122 may be formed from polyethylene.

The metal wires 121 provide the conductivity required for leak detection, and are arranged in a grid approximately 40 mm x 40 mm. The metal wires have a thickness of less than 1 mm, and are affixed to the plastic support 122 by being woven therethrough. The very thin nature of the metal wires 121 means that the plastic support 122, and the first and second non-conductive layers 11 and 13 are required to protect the vulnerable metal wires 121.

In use, the conductive geotextile 1 may be manufactured in sheets, which are laid side-by-side during installation, and must then subsequently be connected in order to allow full, uninterrupted electrical conductivity between sheets necessary for the purposes of certain electric leak detection methodologies. In order to allow said conductivity, the metal wires 121 of the sheets must be brought into contact with each other and kept in a connected state.

Figure 1c illustrates a method of connecting one sheet of conductive geotextile 1a with another sheet of conductive geotextile 1b. The connection between the two metal wire layers 12a and 12b - and particularly between the metal wires 121 located there on - requires that the first and second non-conductive layers of each sheet 11a,b and 12a,b are separated from their respective metal wire layers 12a,b. Furthermore, the first and second non-conductive layers 11a,b and 12a,b are arranged to be interleaved so as to facilitate the connection between the metal wire layers 12a,b. The connection between the metal wire layers 12a,b may be formed by welding together the wires from the respective metal wire layers 12a,b. When covering a large area with a conductive geotextile 1, such a method of connection is both time-consuming and complex.

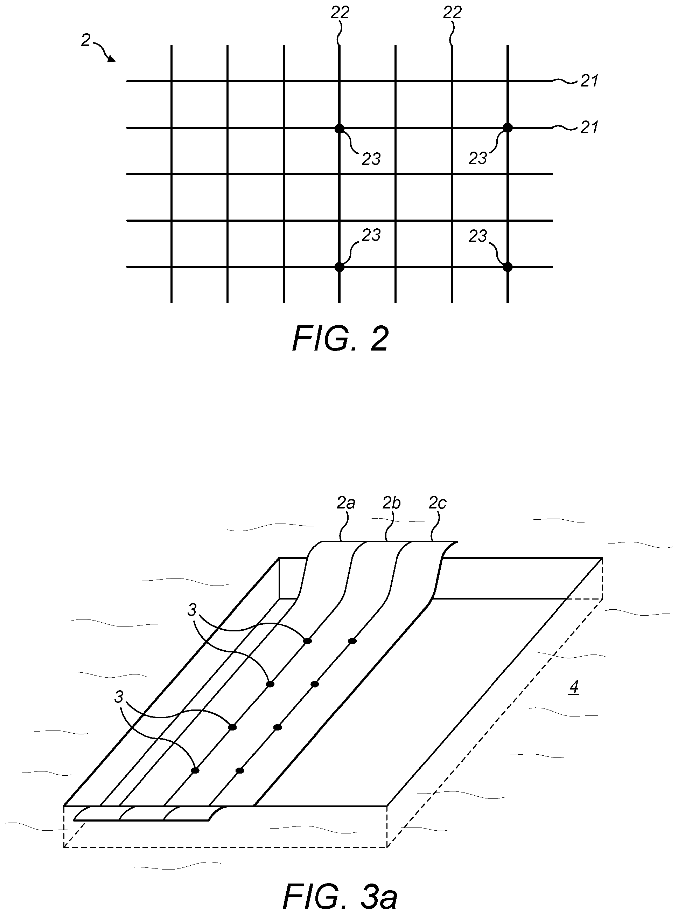

Figure 2 shows a conductive mesh 2 according to an exemplary embodiment of the invention.

The conductive mesh 2 is a mesh comprising first members 21 and second members 22, spaced so as to form a grid. The conductive mesh 2 is provided as a single conductive layer, having the requisite strength to support itself without need of a plastic support 122 or a non-conductive layer 11 or 13.

The conductive mesh 2 may comprise polyethylene, though it will be understood that other plastics may be employed. The conductive mesh 2 also comprises carbon in order to provide conductive properties.

In an exemplary embodiment of the present invention, there is a method of forming the conductive mesh 2 by extrusion. Particularly, the first members 21 and second members 22 are formed by the extrusion of polyethylene.

The extruded first and second members 21,22 are arranged in a grid. Subsequently, the first and second members are connected using a plurality of fastening means 23.

Any suitable fastening means may be employed. For example, an extrusion weld, fusion weld, simply tying like a fishing net, or a zip tie may be used.

Granules or powders of carbon are mixed into the molten polyethylene before or during the extrusion, in order to provide the first and second members of the mesh with conductive properties. The ratio of carbon to polyethylene may be varied, so as to vary the level of conductivity of the mesh in order to deliver the most appropriate level of conductivity for the leak detection method in question.

For example, an application such as leak detection in a double skin alarm-type system may require a lower electrically conductive mesh, which can consequently be manufactured more cheaply. In contrast, an application such as leak detection of a single skin using a spark or arc testing method may require a highly electrically conductive mesh.

Figure 3a shows a conductive mesh 2 part way through installation. A plurality of sheets of conductive mesh 2a-c are laid in the ground 4. The sheets 2a-c are laid side-by-side, though it will be understood that the sheets may be laid in a variety of alternative configurations. The sheets 2a-c are connected at a plurality of connection points 3, in order to provide electrical conductivity throughout the sheets 2a-c.

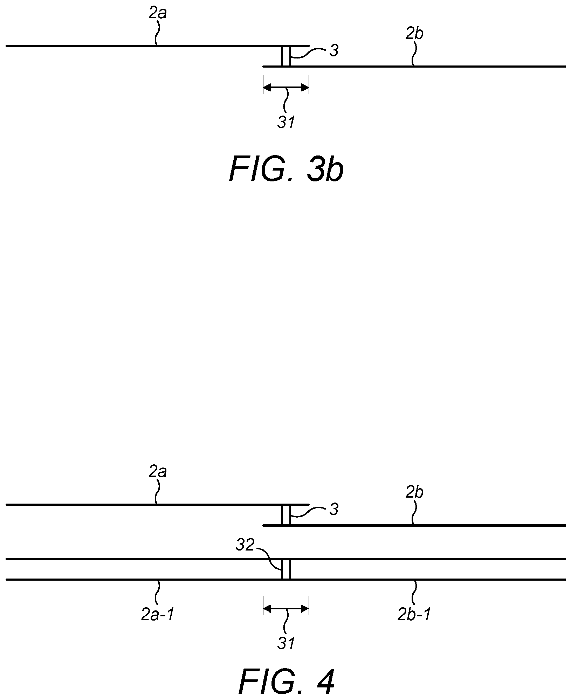

Figure 3b shows a cross-sectional view of two connected sheets 2a and 2b. Due to the single-layered nature of the sheets 2a-c there is no need for interleaving of multiple layers, and only a small overlap region 31 is required to provide conductivity between the sheets 2a and 2b.

The connection at the connection point 3 may be formed by a plurality fastening means, such as a zip tie (not shown). Alternatively, the connection at the connection point 3 may be performed by extrusion or fusion welding the two sheets 2a,b together.

According to an exemplary embodiment of the invention, a conducting mesh 2a may be supplied pre-attached to a geomembrane 2a-1.

Figure 4 shows a cross-sectional view of two connected sheets 2a and 2b, wherein each sheet is pre-attached to a geomembrane 2a-1 and 2b-1. Because both the geomembranes 2a-1,2b-1 and the conductive mesh 2a,b are formed from plastics material, a single extrusion welder tool may be employed to connect the geomembranes at geomembrane connection point 32, and to connect the conductive mesh at connection point 3. A cheaper alternative is to use fusion welding, whereby the sheets are welded together in situ having been placed in position. Advantageously, the conductive mesh may reduce the time and effort required to install a conductive layer required for an electronic leak detection system. A single mesh layer provides strength and conductivity, thereby not requiring extra layers to support or protect a delicate conductive element. The single-layered nature of the mesh may simplify the process of installation, thereby reducing costs and increasing the accuracy of the associated system.

Furthermore, the extruded nature of the material advantageously allows for the variation of conductivity level during manufacture, by variation of the amount of carbon. Consequently, cheaper, lower conductivity materials may be employed where suitable.

Additionally, the plastic construction of the conductive mesh allows for the use of extrusion welding to simply connect sheets of mesh. Furthermore, extrusion welding can also be used to connect geomembranes associated with the electronic leak detection system, thereby reducing the number of specialist tools required for installation. An additional advantage is that the mesh and the geomembrane(s) can be made of the same material, such as PE or HDPE.

Additionally, the compact mesh of the invention provides clearer detection results than the further spaced metal wires, advantageously improving detection performance.

The invention is not restricted to the details of the foregoing embodiment(s). The invention is defined by the appended claims.

## Claims

1. A conductive mesh (2) for a leak detection system formed from a single conductive layer comprising a plurality of first members (21) and a plurality of second members (22),
**characterised in that** the first and second members (21, 22) comprise plastics material and carbon mixed in with the plastics material, and the first members (21) cross the second members (22) in a grid arrangement,
wherein the conductive mesh (2) further comprises a plurality of fastening means (23) to hold the first and second members (21, 22) together, and
wherein the conductive mesh (2) is self-supporting.

2. The conductive mesh (2) of claim 1, wherein the crossing first and second members (21, 22) are held together by a welded joint.

3. A leak detection system comprising at least one geomembrane (2a-1), at least one conducting mesh (2) according to claim 1 or claim 2, an electrical source and at least two electrodes.

4. A geomembrane (2a-1) incorporating a conductive mesh (2) according to claim 1 or claim 2.

5. A method of forming a conductive mesh (2), the method comprising:
extruding a plurality of first and second members (21, 22);
arranging the first and second members (21, 22) in a grid, and
connecting the plurality of first and second members (21, 22) using a plurality of fastening means (23),
wherein the conductive mesh (2) is formed from a single conductive layer and the first and second members (21, 22) comprise plastics material and carbon mixed in with the plastics material, and the conductive mesh (2) is self-supporting.

6. The method of claim 5 further comprising mixing carbon into a molten plastics material and extruding the plurality of first and second members from the molten plastics material comprising carbon.

7. The method of claim 5 or 6, in which the quantity of carbon is varied depending upon the particular use intended for the conductive mesh (2).

8. The method of any one of claim 5 to 7, in which the fastening means (23) comprise a plastic extrusion weld, a plastic fusion weld, a zip tie or other mechanical fastener.

9. A method of installing a plurality of sheets of geomembrane (2a-1, 2b-1), wherein each geomembrane comprises a pre-attached conductive mesh (2a, 2b), the method comprising:
laying a first sheet of geomembrane (2a-1);
laying a second sheet of geomembrane (2b-1);
connecting the first and second sheets of geomembrane (2a-1, 2b-1), and
connecting a first and second pre-attached conductive meshes (2a, 2b),
wherein the first and second pre-attached conductive meshes (2a, 2b) are each formed according to the method steps of any of claims 5 to 8.

10. The method of claim 9, in which the connecting of the first and second sheets of geomembrane (2a-1, 2b-1) employs a plastic extrusion welder.

11. The method of claim 9, in which the connecting the first and second sheets of geomembrane (2a-1, 2b-1) employs a plastic twin or single track fusion welder or hot wedge welder.

12. The method of claim 9 or claim 10, in which the connecting the first and second pre-attached conductive meshes (2a, 2b) employs a plastic extrusion welder, a plastic hot air welder or compression between two heated plates to create a fusion weld, or a zip tie or other mechanical fastener.

## Patentansprüche

1. Leitendes Netz (2) für ein Leckdetektionssystem, gebildet aus einer einzelnen leitenden Schicht, umfassend mehrere erste Elemente (21) und mehrere zweite Elemente (22),
**dadurch gekennzeichnet, dass** die ersten und zweiten Elemente (21, 22) Kunststoffmaterial und in das Kunststoffmaterial eingemischten Kohlenstoff umfassen, und wobei die ersten Elemente (21) die zweiten Elemente (22) in einer Gitteranordnung kreuzen,
wobei das leitende Netz (2) ferner mehrere Befestigungsmittel (23) umfasst, um die ersten und zweiten Elemente (21, 22) zusammenzuhalten, und
wobei das leitende Netz (2) selbsttragend ist.

2. Leitendes Netz (2) nach Anspruch 1, wobei die sich kreuzenden ersten und zweiten Elemente (21, 22) durch eine Schweißverbindung zusammengehalten werden.

3. Leckdetektionssystem, umfassend zumindest eine Geomembran (2a-1), zumindest ein leitendes Netz (2) nach Anspruch 1 oder Anspruch 2, eine elektrische Quelle und mindestens zwei Elektroden.

4. Geomembran (2a-1), die ein leitendes Netz (2) nach Anspruch 1 oder Anspruch 2 enthält.

5. Verfahren zum Bilden eines leitenden Netzes (2), wobei das Verfahren Folgendes umfasst:
Extrudieren von mehreren ersten und zweiten Elementen (21, 22) ;
Anordnen der ersten und zweiten Elemente (21, 22) in einem Gitter, und
Verbinden der mehreren ersten und zweiten Elemente (21, 22) unter Verwendung von mehreren Befestigungsmitteln (23),
wobei das leitende Netz (2) aus einer einzelnen leitenden Schicht gebildet ist und die ersten und zweiten Elemente (21, 22) Kunststoffmaterial und in das Kunststoffmaterial eingemischten Kohlenstoff umfassen, und wobei das leitende Netz (2) selbsttragend ist.

6. Verfahren nach Anspruch 5, ferner umfassend Einmischen von Kohlenstoff in ein geschmolzenes Kunststoffmaterial und Extrudieren der mehreren ersten und zweiten Elemente aus dem geschmolzenen Kunststoffmaterial, das Kohlenstoff umfasst.

7. Verfahren nach Anspruch 5 oder 6, bei dem die Quantität von Kohlenstoff variiert wird in Abhängigkeit von der bestimmten Nutzung, die für das leitende Netz (2) vorgesehen ist.

8. Verfahren nach einem der Ansprüche 5 bis 7, wobei die Befestigungsmittel (23) eine Kunststoffextrusionsschweißung, eine Kunststofffusionsschweißung, ein Kunststoffkabelbinder oder ein anderes mechanisches Befestigungselement sind.

9. Verfahren zum Installieren mehrerer Lagen von Geomembran (2a-1, 2b-1), wobei jede Geomembran ein vorab befestigtes leitendes Netz (2a, 2b) umfasst, wobei das Verfahren Folgendes umfasst:
Legen einer ersten Lage von Geomembran (2a-1);
Legen einer zweiten Lage von Geomembran (2b-1);
Verbinden der ersten und der zweiten Lage von Geomembran (2a-1, 2b-1), und
Verbinden eines ersten und eines zweiten vorab befestigten leitenden Netzes (2a, 2b),
wobei das erste und das zweite vorab befestigte leitende Netz (2a, 2b) jeweils gemäß den Verfahrensschritten nach einem der Ansprüche 5 bis 8 gebildet sind.

10. Verfahren nach Anspruch 9, bei dem das Verbinden der ersten und der zweiten Lage von Geomembran (2a-1, 2b-1) eine Kunststoffextrusionsschweißvorrichtung einsetzt.

11. Verfahren nach Anspruch 9, bei dem das Verbinden der ersten und der zweiten Lage von Geomembran (2a-1, 2b-1) eine Kunststoffdoppel- oder Einzelbahnfusionsschweißvorrichtung oder Heizkeilschweißvorrichtung einsetzt.

12. Verfahren nach Anspruch 9 oder Anspruch 10, bei dem das Verbinden des ersten und des zweiten vorab befestigten Netzes (2a, 2b) eine Kunststoffextrusionsschweißvorrichtung, eine Kunststoffheißluftschweißvorrichtung oder Kompression zwischen zwei beheizten Platten, um eine Fusionsschweißung zu erzeugen, oder einen Kabelbinder oder ein anderes mechanisches Befestigungselement einsetzt.

## Revendications

1. Maille conductrice (2) pour un système de détection de fuite formée à partir d'une seule couche conductrice comprenant une pluralité de premiers éléments (21) et une pluralité de seconds éléments (22),
**caractérisée en ce que** les premiers et seconds éléments (21, 22) comprennent une matière plastique et du carbone mélangé dans la matière plastique, et les premiers éléments (21) croisent les seconds éléments (22) dans une configuration de grille,
la maille conductrice (2) comprenant en outre une pluralité de moyens de fixation (23) pour tenir les premiers et seconds éléments (21, 22) ensemble, et
la maille conductrice (2) étant autoportante.

2. Maille conductrice (2) selon la revendication 1, dans laquelle les premiers et seconds éléments (21, 22) se croisant sont tenus ensemble par un joint soudé.

3. Système de détection de fuite comprenant au moins une géomembrane (2a-1), au moins une maille conductrice (2) selon la revendication 1 ou la revendication 2, une source électrique et au moins deux électrodes.

4. Géomembrane (2a-1) intégrant une maille conductrice (2) selon la revendication 1 ou la revendication 2.

5. Procédé de formation d'une maille conductrice (2), le procédé comprenant :
l'extrusion d'une pluralité de premiers et seconds éléments (21, 22) ;
l'agencement des premiers et seconds éléments (21, 22) en grille, et
la liaison de la pluralité de premiers et seconds éléments (21, 22) à l'aide d'une pluralité de moyens de fixation (23),
dans lequel la maille conductrice (2) est formée à partir d'une seule couche conductrice et les premiers et seconds éléments (21, 22) comprennent une matière plastique et du carbone mélangé dans la matière plastique, et la maille conductrice (2) est autoportante.

6. Procédé selon la revendication 5 comprenant en outre le mélange de carbone dans une matière plastique fondue et l'extrusion de la pluralité de premiers et seconds éléments à partir de la matière plastique fondue comprenant du carbone.

7. Procédé selon la revendication 5 ou 6, dans lequel la quantité de carbone est modifiée en fonction de l'utilisation particulière destinée à la maille conductrice (2).

8. Procédé selon l'une quelconque des revendications 5 à 7, dans lequel les moyens de fixation (23) comprennent un soudage de plastique par extrusion, un soudage par fusion de plastique, un collier de serrage ou une autre attache mécanique.

9. Procédé d'installation d'une pluralité de feuilles de géomembrane (2a-1, 2b-1), dans lequel chaque géomembrane comprend une maille conductrice préalablement attachée (2a, 2b), le procédé comprenant :
le dépôt d'une première feuille de géomembrane (2a-1) ;
le dépôt d'une seconde feuille de géomembrane (2b - 1) ;
la liaison des première et seconde feuilles de géomembrane (2a-1, 2b-1), et
la liaison de première et seconde mailles conductrices préalablement attachées (2a, 2b),
dans lequel les première et seconde mailles conductrices préalablement attachées (2a, 2b) sont chacune formées selon les étapes de procédé selon l'une quelconque des revendications 5 à 8.

10. Procédé selon la revendication 9, dans lequel la liaison des première et seconde feuilles de géomembrane (2a-1, 2b-1) emploie une machine à souder par extrusion de plastique.

11. Procédé selon la revendication 9, dans lequel la liaison des première et seconde feuilles de géomembrane (2a-1, 2b-1) emploie une machine à souder par fusion de plastique à piste simple ou double ou une machine à souder à chaud.

12. Procédé selon la revendication 9 ou la revendication 10, dans lequel la liaison des première et seconde mailles conductrices préalablement attachées (2a, 2b) emploie une machine à souder par extrusion de plastique, une machine à souder à air chaud de plastique ou une compression entre deux plaques chauffées pour créer une soudure de fusion, ou un collier de serrage ou une autre attache mécanique.
